# EUROPEAN PATENT APPLICATION

(11) **EP 4 075 462 A1**
(43) Date of publication of application: **19.10.2022**
(21) Application number: 22167950.9
(22) Date of filing: 12.04.2022
(51) Int. Cl.: H01G 11/12, H01G 11/84, H01G 13/00, H01M 4/82, H01M 10/04, H01M 4/36, H01G 13/02

(54) **MACHINE FOR MAKING ELECTRIC BATTERIES**

(30) Priority: 12.04.2021 IT 202100009146
(71) Applicant: MS2 S.r.l., 40057 Granarolo dell'Emilia (BO) (IT)
(72) Inventor: SPATAFORA, Matteo, 40057 Granarolo dell'Emilia (BO) (IT); COLOMBO, Matteo, 40057 Granarolo dell'Emilia (BO) (IT); GREPIONI, Loris, 40057 Granarolo dell'Emilia (BO) (IT)
(74) Representative: Manzella & Associati

(57) **Abstract**

The machine for manufacturing electric batteries comprises a carousel member (30) peripherally equipped with a plurality of handling devices (31) able to receive in line, in succession, individual cells of an electric battery and to transfer the same individual cells to a stacking device (40) for forming a stack of said individual cells. Said individual cells are obtained from a strip (2) consisting of a plurality of superimposed foil elements, forming at least an anode, a cathode and a separator element of dielectric material interposed between said anode and cathode.

## Description

### Technical field

The present invention relates to a machine and a method for manufacturing electric batteries consisting of stacked cells.

### Prior art

The use of electric batteries consisting of a plurality of cells arranged in a stack, each of which comprising an anode and a cathode facing each other, between which a separator element of dielectric material is interposed, is currently known in the sector of devices for storing electrical energy. This technology is used for example for manufacturing rechargeable lithium batteries.

Various systems are known for manufacturing electric batteries consisting of a plurality of cells arranged in a stack, each of which comprising an anode and a cathode facing each other, between which a separator element is interposed. For example, a known system provides for the use of a separator element formed by a single continuous tape. In an embodiment, called "z-folding", the separator tape is folded several times in alternating directions. In an alternative embodiment, the separator tape is folded several times in a single folding direction. The electrodes, anode and cathode, are for example joined by adhesive means on both faces of the separator tape.

A machine for manufacturing electric batteries of this type is disclosed for example in European patents EP 2 569 816 and EP 2 856 552 and in US patent application 2019/0229360.

The known manufacturing systems of the aforementioned electric batteries generally have high complexity, in particular due to the need to ensure adequate precision in the stacking of the individual cells.

It is also complained that the known construction systems of the aforementioned electric batteries often have poor efficiency, high production costs and low productivity.

### Disclosure

The aim of the present invention is solving the aforementioned problems, devising a machine which permits to optimally make electric batteries consisting of a plurality of cells arranged in a stack, each of which comprising an anode and a cathode facing each other, between which a separator element is interposed.

A further object of the invention is to provide a machine for manufacturing electric batteries that allows precise control of the stacking of said cells.

A still further purpose of the invention is to provide a machine for manufacturing electric batteries that ensures high production speed.

An even further object of the invention is to provide a machine for manufacturing electric batteries which has simple constructive and functional conception, reliable operation, versatile use, and relatively low cost.

The aforementioned purposes are achieved, according to the present invention, by the machine for manufacturing electric batteries consisting of a plurality of stacked cells according to claim 1.

The machine for manufacturing electric batteries consisting of a plurality of stacked cells comprises a carousel member peripherally equipped with a plurality of handling devices configured for receiving in line, in succession, single cells of an electric battery and for transferring the same individual cells to a stacking device for forming a stack of said individual cells.

According to the present invention, said carousel member is rotated with continuous movement along a horizontal axis.

Preferably the machine comprises means for feeding a plurality of superimposed foil elements, forming at least an anode, a cathode and a separator element for dielectric material interposed between said anode and cathode.

Preferably, said superimposed foil elements are fed in the form of a flexible strip of dielectric material bearing respective elements forming the anode and the cathode, applied on the opposite faces.

Preferably, the machine comprises means for cutting to size said superimposed foil elements to form said individual cells of an electric battery.

Advantageously, said feeding means comprises a temporary storage device of a portion of said superimposed foil elements able to compensate for a different speed of the same superimposed foil elements upstream and downstream of said storage device.

Said means for cutting to size said superimposed foil elements is arranged downstream of said temporary storage device.

Preferably, said temporary storage device comprises a pair of belts developed one in front of the other and associated with suction means adapted to depress the surface of an active section of the belts, to hold said foil elements superimposed, in adhesion thereon, such as to follow the unwinding of the same superimposed foil elements.

The temporary storage device allows to uncouple the rolling process, at the entry, from the cutting and stacking process, at the exit.

Preferably, said feeding means comprises means for controlling and adjusting the feeding position of said foil elements superimposed in an axial and/or tangential direction.

Preferably, said carousel member is peripherally equipped with a plurality of handling devices adapted to receive said individual cells in succession in line and to transfer the same individual cells to said stacking device.

Preferably, said handling devices are respectively made up of a plate able to receive an individual cell associated oscillating with said carousel member.

Preferably, said plate is articulated to a pair of swinging arms carried by said carousel member, according to respective axes of rotation parallel to the axis of the same carousel member.

Preferably, said pair of arms comprises a first arm pivoted on said carousel member and a second arm articulated to a crank mechanism, controlled by suitable cam members.

Preferably, said stacking device comprises a rotatable member equipped with at least one member for receiving said cells, said rotatable member being able to be operated stepwise upon reaching a predetermined number of said cells stacked on said receiving member.

Preferably, the machine comprises means for unloading said stack of cells from said stacking device upon reaching said predetermined number of said stacked cells.

The present invention also relates to a method for manufacturing electric batteries consisting of a plurality of stacked cells which includes the steps of
a. feeding a plurality of superimposed foil elements, forming at least an anode, a cathode and a separator element interposed between said anode and cathode;
b. cutting said superimposed foil elements to size to form individual cells of an electric battery to be made;
c. feeding said individual cells to a carousel member peripherally equipped with a plurality of handling devices configured for receiving in line, in succession, said individual cells and for transferring the same individual cells to a stacking device for forming a stack of said individual cells;
d. at the same time controlling the accuracy of the positioning of said individual cells to be transferred to said stacking device;
e. unloading said stack of cells from said stacking device upon reaching a predetermined number of stacked cells.

Preferably, the method provides for rotating said carousel member with continuous motion so as to bring said individual cells held by said handling devices to a station in which means for controlling the accuracy of the positioning of said individual cells to be transferred to the stacking device operates; to a station in which control means of the electrical functionality of the cells operates; to an unloading station for any possible cells to be discarded.

### Description of drawings

The details of the invention will become more evident from the detailed description of a preferred embodiment of the machine for manufacturing electric batteries, illustrated by way of example in the accompanying drawings, wherein:

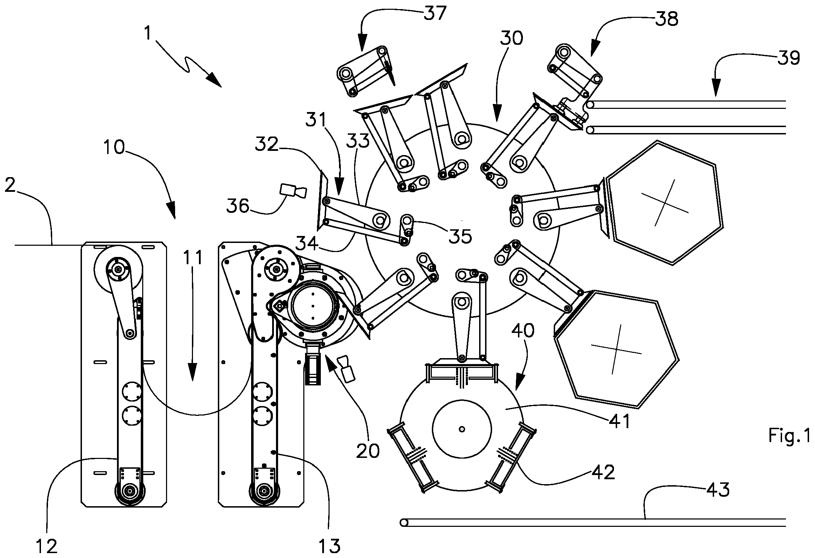

Figure 1 shows a side view of the machine for manufacturing electric batteries according to the present invention;

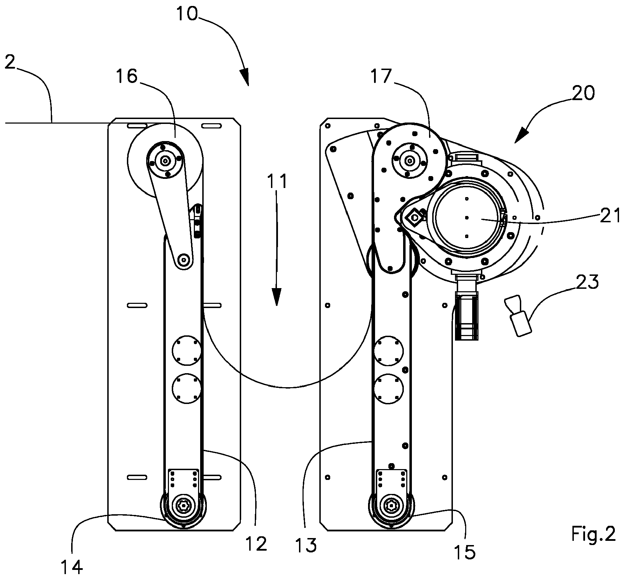

Figure 2 shows a side view of the detail of said means for feeding the superimposed foil elements;

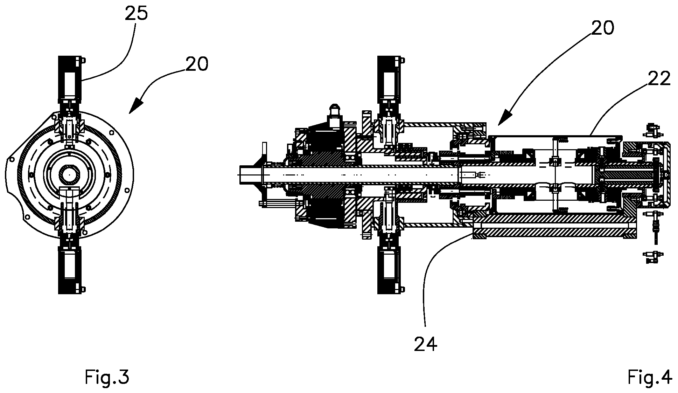

Figures 3 and 4 show respectively a cross-sectional view and a longitudinal sectional view of means for correcting the position of said cells.

### Description of embodiments of the invention

With particular reference to these figures, the numeral 1 indicates as a whole the machine for manufacturing electric batteries consisting of a plurality of stacked cells.

The machine comprises means 10 for feeding a plurality of superimposed foil elements, forming at least one anode, a cathode and a separator element for dielectric material interposed between said anode and cathode. The superimposed foil elements are fed in the form of a flexible strip 2 of dielectric material bearing, applied on the opposite faces, respective elements forming the anode and the cathode.

The strip 2 is fed to cutting means 20 adapted to form individual cells of an electric battery. In practice, each single cell consists of a portion of strip 2 of dielectric material bearing respective elements forming the anode and the cathode applied on the opposite faces. As specified below, cutting means 20 is equipped with a rotating knife 21, operable according to a horizontal axis orthogonal to the unwinding plane of the strip 2.

Upstream of the cutting means 20, the feeding means 10 comprises a temporary storage device 11, also known as a buffer, of a portion of said strip 2 of superimposed foil elements, adapted to compensate for a different speed of the same strip 2 upstream and downstream of said storage device 11.

The temporary storage device or buffer 11 comprises a pair of belts 12, 13 which extend vertically in front of each other, winding on suitably motorized rollers 14, 15, so as to follow the unwinding of the strip 2 of superimposed foil elements. The belts 12, 13 are operated independently of each other by special motor members. Preferably, the belts 12, 13 are suitably perforated and associated with suction means suitable for depressing the surface of an active portion of the belts 12, 13, in order to hold the strip 2 adhering thereto.

In practice, the strip 2 of the superimposed foil elements unwinds, by means of a first unwinding roller 16, on the first belt 12 of the buffer 11 and detaches therefrom, forming a loop, to pass on the second belt 13 of the buffer 11, equipped at the top with a second unwinding roller 17. Basically, the temporary storage device 11 is able to uncouple the rolling process at the entry from the cutting and stacking process at the exit of the machine, as specified below.

Thanks to the depression exerted on the surface of the active portion of the second belt 13, the second unwinding roller 17 is able to correct the feeding position of the strip of the superimposed foil elements.

According to a prerogative of the invention, the machine comprises means for controlling and correcting the feeding position of the superimposed foil elements.

In particular, said correction occurs in a tangential direction by anticipating or slowing down the position of the rotating knife 21 by means of the motor of the rotating knife 21, immediately after the cut. It is also possible to correct the position of the support placed on the rotating knife 21 in an axial direction, by means of a moving element 22 controlled by dedicated motor members. Conveniently, the correction of the position is controlled by means of a special camera 23.

Said cutting-to-size means 20 for forming individual cells of an electric battery is arranged downstream of the temporary storage device or buffer 11. As said before, the cutting means 20 is equipped with a rotating knife 21, operable according to a horizontal axis orthogonal to the unwinding plane of the strip 2. The rotating knife 21 cuts the material at a fixed counter blade.

The individual cut cells are held on a mobile element 24, associated with motorization means 25, thanks to the depression exerted on the surface of the mobile element.

Downstream of the means 20 for cutting to size the strip 2 of foil elements, there is a carousel or stacker member 30 peripherally equipped with a plurality of handling devices 31 for receiving the individual cells in line, in succession, and for transferring the same individual cells to a stacking device 40 for forming a stack of said single cells. The carousel member 30 is rotated with continuous movement according to a horizontal axis orthogonal to the unwinding plane of the strip 2.

The individual cells are transferred to the carousel member thanks to different degrees of vacuum applied to the mobile elements.

The handling devices 31 consist respectively of a plate 32 adapted to receive a single cell associated in oscillating manner with the carousel member 30. In particular, the plate 32 is articulated to a pair of arms 33, 34 which are carried oscillating by the carousel member 30. More precisely, a first arm 33 is pivoted on the carousel member 30, according to an axis of rotation parallel to the axis of the same carousel member, and a second arm 34 is articulated to a crank mechanism 35, controlled for example by suitable cam means, not shown.

The carousel member 30 is adapted to bring the individual cells retained by said handling devices 31 at a plurality of operating stations. Said operating stations comprise in particular a first station in which means for controlling the accuracy of the positioning of said individual cells to be transferred to the stacking device 40 operates. Said control means comprises for example a video camera 36 connected to suitable means for processing the detected data.

Downstream of the first control station, according to the direction of rotation of the carousel member 30, a second station is provided, in which control means 37 of the electrical functionality of the cells operates, in particular to exclude the possibility of short circuits between the anode and cathode.

Advantageously, downstream of the electrical functionality control station 37, a station for unloading any cells to be discarded is arranged, for example based on the data detected by said means for controlling the accuracy of the positioning of said individual cells. This station provides a device 38 for gripping and transferring the cells, adapted to transfer the cells to be rejected to suitable selective removal means 39, for example a first or a second conveyor belt.

The cell stacking device 40 comprises a rotatable member 41 operable with reciprocating motion upon reaching a predetermined number of stacked cells. The rotatable member 41 peripherally has a plurality of members 42 for receiving said predetermined number of stacked cells.

In operation, the handling devices 31 of the carousel member 30 exchange the individual cells with the rotating member 41 of the stacking device 40, on which said individual cells are deposited until the desired thickness of the battery pack is reached.

The stacked cells are transferred to the subsequent steps of manufacturing the electric battery by means of the underlying conveyor belt 43.

The operation of the machine for making electric batteries is easily understood from the above description.

The strip 2 of dielectric material bearing the respective elements forming the anode and the cathode applied on the opposite faces is fed to the cutting-to-size means 20 to form the individual cells of an electric battery.

In particular, the strip 2 is fed to the cutting-to-size means 20 by means of a temporary accumulation device or buffer 11 which allows to decouple the rolling process at the entry from the cutting and stacking process at the exit. The temporary storage device or buffer 11 comprises a pair of belts 12, 13 which extend vertically in front of each other and are associated with suction means suitable for placing the surface of an active section of the belts 12, 13 under depression, to hold the strip 2 adhering thereto.

In practice, the strip 2 of superimposed foil elements unwinds on the first belt 12 of the buffer 11 and detaches therefrom, forming a loop, to pass on the second belt 13 of the buffer 11.

Means for controlling and correcting the feeding position of the superimposed foil elements operates at the cutting-to-size means 20, said means for controlling and correcting the feeding position being capable of ensuring the correct positioning of the individual cells both in the tangential and axial directions.

The individual cells are then transferred to the carousel member 30 which carries the same cells, held by the handling devices 31, to the stacking device 40 in which the stack of said individual cells is formed.

The carousel member 30, in rotation with continuous motion, brings the individual cells in succession to a station in which means of controlling the accuracy of the positioning of said individual cells to be transferred to the stacking device operates (40); to a station in which control means (37) of the electrical functionality of the cells operates; to an unloading station for any cells to be discarded.

Finally, the individual cells are released from the handling devices 31 of the carousel member 30, one after another, onto the receiving member 42 of the stacking device 40 stopped at the last operating station of the carousel member 30. When the predetermined number of stacked cells has been reached on this receiving member 42, the rotatable member 41 of the stacking device 40 is rotated to unload the stack on the underlying conveyor belt 43.

The described machine achieves the object of optimally manufacturing electric batteries consisting of a plurality of cells arranged in a stack, each of which comprising an anode and a cathode facing each other, between which a separator element is interposed.

In particular, the machine for manufacturing electric batteries according to the present invention ensures a high production speed.

This is made possible thanks to the inventive idea of transferring the individual cells in succession to the stacking device by means of a carousel member, operated with continuous motion, which can stack the individual cells in an accurate manner, previously bringing the same single cells at the operating stations where the quality control operations of said cells are carried out, possibly discarding the defective ones.

A prerogative of the machine according to the invention is to allow accurate control of the correct stacking of the cells, thanks in particular to the presence of means for controlling and correcting the feeding position of the superimposed foil elements forming the cells. Position control and correction are performed both axially and tangentially with respect to the direction of feeding, at the cutting-to-size means which separates the individual cells.

According to the present invention, the feeding means of the superimposed foil elements also permits to decouple the rolling process at the entry from the cutting and stacking process at the exit, compensating for any speed differences of the two steps. This allows to keep constant the speed of the carousel member that carries out the stacking of the cells.

This result is achieved thanks to the creation of a mechanical loop on the flexible strip of dielectric material bearing the respective elements forming the anode and the cathode applied on the opposite faces, downstream of the access to means for cutting to size the individual cells. This loop of the strip creates a temporary storage or buffer capable of compensating for a different feeding of the tape.

The machine described by way of example is susceptible to numerous modifications and variations according to the various requirements.

In the practical embodiment of the invention, the used materials, as well as the shape and the dimensions, may be modified depending on needs.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. A machine for manufacturing electric batteries, comprising a carousel member (30) peripherally equipped with a plurality of handling devices (31) capable of receiving in line single cells of an electric battery, in succession, and of transferring the same single cells to a stacking device (40) for forming a stack of said individual cells.

2. A machine as in claim 1, wherein said carousel member (30) is rotatable with continuous movement according to a horizontal axis.

3. A machine as in claim 1 or 2, wherein it comprises feeding means (10) for a plurality of superimposed foil elements, forming at least an anode, a cathode and a separating element of dielectric material interposed between said anode and cathode; and means for cutting to size (20) said superimposed foil elements to form said individual cells of an electric battery.

4. A machine as in claim 3, wherein said feeding means (10) comprises a temporary accumulation device (11) for a portion of said superimposed foil elements capable of compensating for a different speed of the same superimposed foil elements upstream and downstream of the accumulation device (11).

5. A machine as in claim 4, wherein said temporary accumulation device (11) comprises a pair of belts (12, 13) developed in front of each other and associated with suction means capable of applying vacuum to the surface of an active section of the same belts (12, 13), to hold said superimposed foil elements in adhesion thereto, so as to follow the unwinding of the superimposed foil elements.

6. A machine as in claim 3 or 4, wherein said feeding means (10) comprises means for controlling and correcting the feeding position of said foil elements superimposed in an axial and/or tangential direction.

7. A machine as in any one of the preceding claims, wherein said stacking device (40) comprises a rotatable member (41) equipped with at least one member (42) for receiving said cells, said rotatable member (41) being capable of being operated stepwise upon reaching a predetermined number of said cells stacked on said receiving member (42).

8. A machine as in any one of the preceding claims, wherein it comprises means for unloading said stack of cells from said stacking device (40) upon reaching a predetermined number of said stacked cells.

9. A method for manufacturing electric batteries, **characterized in that** it includes the steps of
a. feeding a plurality of superimposed foil elements, forming at least an anode, a cathode and a separator element interposed between said anode and cathode;
b. cutting said superimposed foil elements to size to form individual cells of an electric battery to be made;
c. feeding said individual cells to a carousel member (30) peripherally equipped with a plurality of handling devices (31) for receiving in line, in succession, said individual cells and for transferring the same individual cells to a stacking device (40) for forming a stack of said individual cells;
d. at the same time controlling the accuracy of the positioning of said individual cells to be transferred to said stacking device;
e. unloading said stack of cells from said stacking device (40) upon reaching a predetermined number of stacked cells.

10. A method as in claim 9, wherein it provides for rotating said carousel member (30) with continuous movement so as to bring said individual cells held by said handling devices (31) to a station wherein means for checking the accuracy of the positioning of said individual cells to be transferred to the stacking device (40) operate; to a station wherein means (37) for checking the electrical functionality of the cells operate; to an unloading station for any cells to be discarded.
